# NEW EUROPEAN PATENT SPECIFICATION

(11) **EP 1 194 869 B2**
(45) Date of publication and mention of the opposition decision: **25.03.2015**
(45) Mention of the grant of the patent: 19.08.2009
(21) Application number: 00930525.1
(22) Date of filing: 09.05.2000
(51) Int. Cl.: G06F 17/30, H04L 29/06, G07F 17/00

(54) **TECHNIQUE FOR SECURE REMOTE CONFIGURATION OF A SYSTEM**
TECHNIK ZUR SICHEREN FERN-KONFIGURATION EINES SYSTEMS
TECHNIQUE DE CONFIGURATION SECURISEE D'UN SYSTEME A DISTANCE

(30) Priority: 13.05.1999 US 133921 P
(43) Date of publication of application: 10.04.2002
(73) Proprietor: Ascom Hasler Mailing Systems, Inc., Shelton, CT 06484-0904 (US)
(72) Inventor: BROOKNER, George, M., Norwalk, CT 06851 (US)
(74) Representative: Le Roux, Martine
(86) International application number: PCT/US2000/012721
(87) International publication number: WO 2000/070503

(56) References cited:
- EP-A2- 0 953 901
- WO-A-98/26548
- US-A- 4 853 961
- US-A- 5 142 577
- US-A- 5 715 164
- US-A- 5 841 865
- US-A- 5 852 722
- US-A- 5 898 154
- US-A- 6 029 155
- FORD W ET AL: "PUBLIC-KEY CRYPTOGRAPHY AND OPEN SYSTEMS INTERCONNECTION" IEEE COMMUNICATIONS MAGAZINE, IEEE SERVICE CENTER. PISCATAWAY, N.J, US, vol. 30, no. 7, 1 July 1992 (1992-07-01), pages 30-35, XP000307910 ISSN: 0163-6804

## Description

### Technical Field

The invention relates to a technique for system configuration, and more particularly to a technique for remotely configuring a system through a communications network in a secure manner.

### Background of the Invention

Use of processor-controlled (P-C) products, e.g., personal and hand-held computers, wireless information devices, postage franking systems, etc. is ubiquitous. However, people may utilize these P-C products differently to satisfy their individual needs. For that reason, P-C product manufacturers offer different options to customers for them to individualize the products. Typically, when a customer orders a P-C product from a manufacturer, he/she specifies the desired options for the product. In response, the manufacturer starts with a basic pre-assembled system having a generic configuration, and adds the specified options thereto to customize the system. The manufacturer then ships the resulting system to the customer to fulfill the order.
WO -98/26548 discloses a system for the automatic configuration of internet access devices.

### Summary of the Invention

The customization by manufacturers of P-C products described above is beneficial to a customer in that the customer pays only for the product having the configuration specified by him/her, without overspending on some product features which the customer does not need. However, I have identified certain aspects of the prior art practice as being particularly disadvantageous. For example, after selecting a P-C product, a customer needs to wait for the manufacturer customization, which may take a long time because of a backlog. It is particularly frustrating for a customer after he/she spends much time selecting the desired P-C product in a store and cannot immediately bring home the product because of the need of the manufacturer customization.

I have recognized that in the manufacturer customization, the bulk of the time is expended on installing the software options specified by the customer in a basic system having a generic configuration. I have also recognized that most of the P-C products have a modem device therein or provide for similar capabilities for communicating data over a communications network. Thus, in accordance with the invention, the customer may be provided with the basic pre-assembled system having modem capabilities, and on his/her own download the specified software components onto the system from a server to customize the system. Advantageously, by shifting the customization burden onto the customer in accordance with the invention, the customer can be in possession of a P-C product as soon as the purchase thereof is consummated. In addition, the product manufacturer saves on the otherwise labor and time for installing the software options for the customer.

In accordance with the invention, a server is employed for configuring franking systems through a communications network. Records associated with the devices are stored in the server. On initial power up of one such franking system the franking system automatically generates a request for configuration thereof to the server through the communications network. This request includes coded information resulting from encrypting at least an identifier, e.g., a serial number, identifying the franking system, or alternatively from cryptographically signing at least part of the request. In response to such a request, the server locates a record associated with the franking system, and verifies the identity of the franking system based on the coded information. The record includes second information concerning a device configuration specified by the customer. Only when the identity of the franking system is verified, does the server provide through the communications network to the P-C device information objects including software components, for realization of the specified configuration based on the second information.

### Brief Description of the Drawing

Further objects, features and advantages of the invention will become apparent from the following detailed description taken in conjunction with the accompanying drawing, in which:
Fig. 1 illustrates an arrangement for configuring a system in accordance with the invention;
Fig. 2 illustrates the format of a system record stored in a server in the arrangement of Fig. 1; and
Fig. 3 illustrates a routine for providing software components from the server to the system to realize a specified system configuration.

### Detailed Description

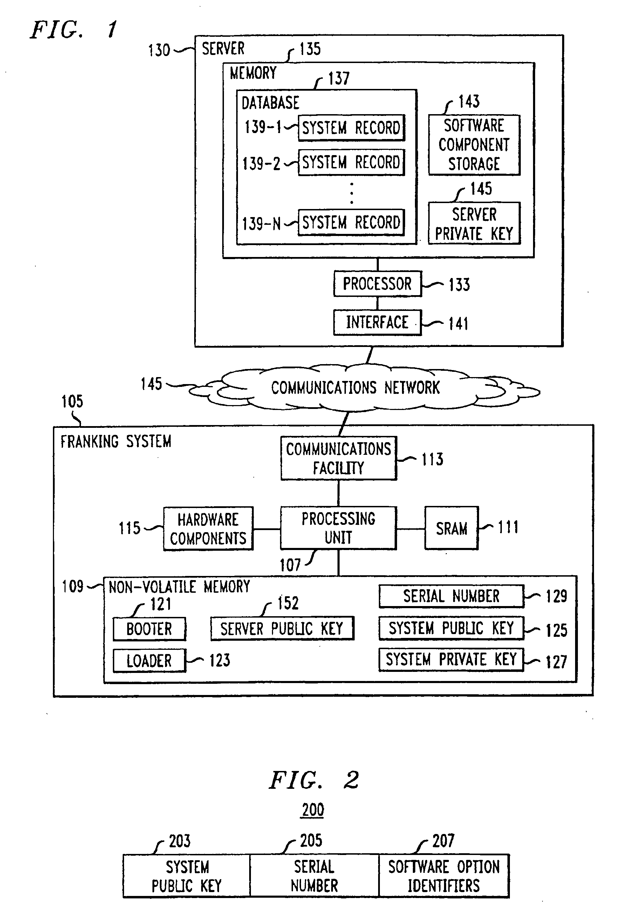

Fig. 1 illustrates an arrangement embodying the principles of the invention in which a processor-controlled (P-C) system may be customized through a communications network. By way of example, this system is illustratively a franking system, numerically denoted 105, for generating postage indicia which serve as proof of payment of postage.

In accordance with the invention, system 105 when delivered to a user has a generic configuration, which includes processing unit 107 comprising one or more conventional processors, non-volatile memory 109, static random access memory (SRAM) 111, communications facility 113 which includes a modem device or similar circuitry or network card, and necessary hardware components 115 for carrying out the generation of postage indicia. This generic configuration allows subsequent system customization by the user to satisfy his/her individual needs. For example, in accordance with the invention, the user later may on his/her own integrate specified software options into system 105 to customize same. Thus, the manufacturer of system 105 in this instance does not customize the system for the user as in prior art. As a result, system 105 advantageously can be delivered to the user soon after the user places the order thereof. At the same time, the manufacturer saves on the otherwise labor and time for customizing system 105 for the user.

Server 130, which may be administered and maintained by the manufacturer of system 105, provides through communications network 145 the specified software options to realize the user customization in accordance with the invention. Communications network 145 may be, e.g., the Internet, a telephone network or other public or private network. Server 130 includes processor 133, memory 135, and interface 141 for establishing a communication connection with the systems served thereby, e.g., system 105. When the user orders system 105 with certain software and hardware options selected by the user, the manufacturer causes system 105 having a generic configuration and the selected hardware options delivered to the user. At the same time, the manufacturer causes server 130 to create a record therein, registering the selected software options and/or hardware options of system 105. Without loss of generality, in this instance the software options but not the hardware options are registered in such a record. To that end, database 137 is maintained by server 130 in memory 135, which contains system records 139-1 through 139-N, associated with N different systems served by server 130, respectively, where N represents an integer greater than zero. Without loss of generality, let's assume here that system record 139-1 is associated with system 105.

Fig. 2 illustrates the format of a generic system record denoted 200. As shown in Fig. 2, record 200 includes field 203 containing a system public key for decrypting messages from the system associated with the record in a manner described below, field 205 containing a serial number assigned to the system for identifying same, and field 207 contains identifiers indicating the software options selected by the user.

When the user receives the package containing system 105 having the generic configuration, and selected hardware components for realizing the hardware options specified by the user, the user connects the selected hardware components to system 105 pursuant to the instructions provided by the manufacturer. To realize the software options specified by the user, programs such as booter 121 including basic input/output system (BIOS) functions, and loader 123 are provided and pre-stored in non-volatile memory 109 in system 105. On initial power up of system 105 and connection thereof to network 145 through communication facility 113, booter 121 is invoked which performs conventional system start-up functions which include, among others, causing loader 123 to be copied into SRAM 111 at a specified location to which a program vector points. Directed by the program vector, processing unit 107 executes the code of loader 123 in SRAM 111 .

Instructed by the code of loader 123, unit 107 causes communications facility 113 to establish a communication connection with server 130 through network 145. Unit 107 transmits a configuration request for software components from server 130 to realize the specified software options. However, in accordance with an aspect of the invention, security measures are implemented to ensure that system 105 is a legitimate system to receive the software components from server 130. For example, a cryptographic methodology may be implemented to encrypt and/or cryptographically sign certain information in the request from system 105. The success by server 130 in decrypting the resulting encrypted information and/or authenticating the resulting digital signature verifies the identity and legitimacy of system 105. One such cryptographic methodology is the RSA methodology, named after its developers, Rivest, Shamir and Adleman. For details on the RSA methodology, one may refer to: R. Rivest et al., "A Method for Obtaining Digital Signatures and Public Key Cryptosystems," Communications of the ACM, Vol. 21, No. 2, February 1978. The RSA methodology involves a public key algorithm which uses a private key and a public key for data encryption. Unlike a private key which is securely protected from the public, a public key can be published and made known to the public. The keys for the RSA algorithm are generated mathematically, and are computational inverses to each other. The success of the RSA methodology depends on the use of very large numbers for the keys.

Thus, for example, in implementing the RSA methodology here, a key pair consisting of system public key 125 and system private key 127 are assigned to system 105, which are pre-stored in memory 109. In addition, as mentioned before a serial number, denoted 129, is assigned to system 105 to identify same, which is pre-stored in memory 109. In this instance, the aforementioned configuration request by system 105 includes information concerning (a) system public key 125 and (b) serial number 129 which is encrypted using system private key 127 in accordance with the RSA methodology.

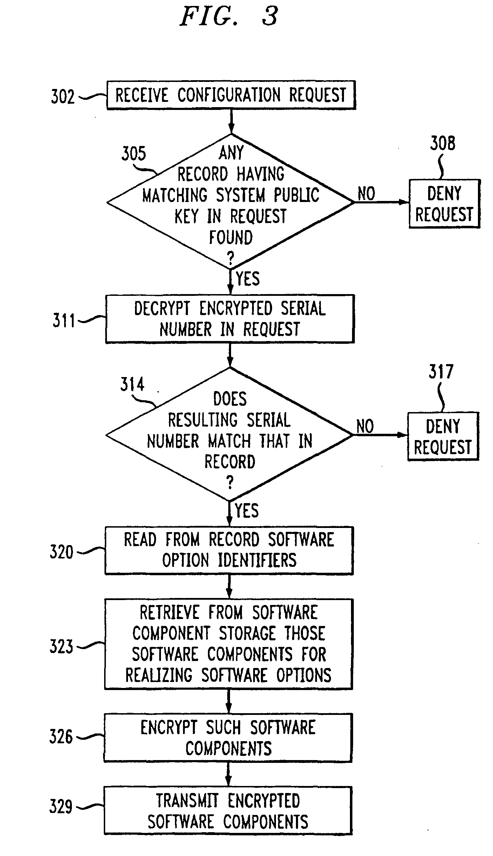

Upon receiving the configuration request through interface 141, as indicated at step 302 in Fig. 3, processor 133 at step 305 searches database 137 for any system record having field 203 thereof matching system public key 125 in the request. If no such record is found, processor 133 at step 308 denies the configuration request. Otherwise, if any such record (e.g., record 139-1 associated with system 105 in this instance) is found, processor 133 at step 311 decrypts the encrypted serial number in the request using received system public key 125 or alternatively the matching system public key in field 203 of the record, in accordance with the RSA methodology. Processor 133 at step 314 determines whether the resulting serial number matches that in field 205 of the record. If they do not match, processor 133 at step 317 denies the configuration request. Otherwise, if they match, processor 133 at step 320 reads from field 207 of the record the identifiers indicating the software options specified by the user for installation in system 105. Based on such identifiers, processor 133 at step 323 retrieves from software component storage 143 those software components for realizing the specified software options. To ensure secure transmission, and prevent unauthorized use, of such software components to system 105, processor 133 at step 326 encrypts the software components using server private key 145, in accordance with the RSA methodology. Processor 133 at step 329 transmits the encrypted software components to system 105 through the established communication connection.

After receiving the encrypted software components, processing unit 107 in system 105 utilizes server public key 152, which corresponds to server private key 145 and is pre-stored in memory 109, to decrypt the received software components. The resulting software components, which contain software identifications (IDs) in their headers, are then loaded into SRAM 111, in accordance with a program vector table. This program vector table, e.g., in the form of a memory map, specifies the memory locations in SRAM 111 for the respective software components identified by their software IDs, and thus the order of execution of these software components. As processing unit 107 executes the downloaded software components, the specified software options are realized.

The foregoing merely illustrates the principles of the invention. It will thus be appreciated that those skilled in the art will be able to devise numerous other arrangements which embody the principles of the invention and are thus within its spirit and scope.

For example, the invention is disclosed in the context of an initial configuration of system 105 after it is delivered to the user. However, it is apparent from the disclosure heretofore that the inventive methodology is equally applicable to a re-configuration of the system after the initial configuration. In that case, loader 123 can be re-invoked to download additional software components from server 130 to modify the initial configuration.

Moreover, in the disclosed embodiment, software components are downloaded to system 105 from server 130 to realize desired system options. It is apparent that selected data, e.g., those concerning the user and/or his/her preferences, may also be downloaded to the system to customize same.

In addition, in the disclosed embodiment, server 130 maintains system record 200 for each system served thereby. The information in field 207 of record 200 enables server 130 to keep track of the current configuration of the system. Server 130 may also rely on the software IDs of the downloaded software components to keep track of the current configuration of the system. Such software IDs may contain version numbers of the respective downloaded software components and may also form part of record 200. When any new versions of the downloaded software components become available, with the knowledge of the current version number of each downloaded software component in the system, server 130 can effectively inform the user of such new versions for upgrading purposes. Moreover, the software IDs identifying the downloaded software components currently installed in the system may also be cataloged and stored in the system itself. In that case, a re-configuration of the system can be accomplished in a more secure manner by downloading additional software components together with an authorization code from server 130. As described in PCT International Publication No. WO 99/66422, published on December 23, 1999, such an authorization code may be derived by server 130 from, among others, the serial number of the system and new software IDs identifying the additional software components. After receiving the additional software components including the software IDs in their headers, and the authorization code, the system independently generates an authorization code based on the received software IDs and the serial number stored in the system. Only if the generated authorization code corresponds to the received authorization code, is the system allowed to install the additional software components therein.

Further, in the disclosed embodiment, the configuration request by system 105 includes information, e.g., the serial number identifying system 105, which is encrypted. However, as mentioned before, such information may be cryptographically signed using the RSA or other cryptographic methodology such as the digital signature algorithm (DSA) or Elliptic Curve algorithm, instead. In that case, the authentication of the resulting digital signature verifies the identity of system 105.

Finally, server 130 and system 105 are disclosed herein in a form in which various functions are performed by discrete functional blocks. However, any one or more of these functions could equally well be embodied in an arrangement in which the functions of any one or more of those blocks or indeed, all of the functions thereof, are realized, for example, by one or more appropriate memories, and/or appropriately programmed processors.

## Claims

1. An apparatus (130) for serving a plurality of franking systems (105) through a communications network (145), the apparatus comprising:
a memory (135) for storing a plurality of records (139) associated with the franking systems, respectively;
an input element for receiving from a selected franking system a request that is automatically generated on an initial power up of the selected franking system for configuration of the selected franking system from a generic configuration to a selected customized configuration through the communications network, the request including coded information;
a processor (133) responsive to the request for locating a record associated with the selected franking system, and verifying an identity of the selected franking system based on the coded information, the record including stored information concerning the selected customized configuration for the selected franking system, the selected customized configuration corresponding to selected franking system information objects including software components preselected by a user of the selected franking system, and
an output element for providing through the communications network to the selected franking system information objects including software components for modifying the generic configuration to the selected customized configuration based on the stored information when the identity of the selected franking system is verified.

2. The apparatus of claim 1 wherein the coded information comprises encrypted information concerning the identity of the selected franking system.

3. The apparatus of claim 2 wherein the coded information comprises encrypted information concerning a serial number of the selected franking system.

4. The apparatus of claim 2 wherein the encrypted information is encrypted in accordance with a public key algorithm.

5. The apparatus of claim 1 wherein the coded information comprises a digital signature resulting from cryptographically signing at least part of the request.

6. The apparatus of claim 1 wherein the information objects further include data.

7. A franking system (105) configurable by a server (130) through a communications network (145), the franking system comprising:
storage (109) for storing a cryptographic element;
a processor (107) for generating a request that is automatically generated on an initial power up of the franking system for configuration of the franking system from a generic configuration to a selected customized configuration which includes therein coded information for verification by the server of an identity of the franking system the coded information being generated using the cryptographic element;
an interface (113) for receiving information objects including software components preselected by a user of the franking system for configuring the franking system from the server through the communications network when the identity of the franking system is verified by the server, the information objects including software components modifying the generic configuration of the franking system,
a memory (111); and
a loader for directing the information objects including software components to be loaded in the memory in accordance with a predetermined plan.

8. The franking system of claim 7 wherein the cryptographic element includes a private key.

9. The franking system of claim 7 wherein the coded information comprises a digital signature resulting from cryptographically signing at least part of the request.

10. The franking system of claim 7 wherein the information objects further include data.

11. A method for use in an apparatus for serving a plurality of franking systems through a communications network, the method comprising:
storing a plurality of records associated with the franking systems respectively;
receiving from a selected franking system a request that is automatically generated on an initial power up of the selected franking system for configuration of the selected franking system from a generic configuration to a selected customized configuration through the communications network, the request including coded information;
in response to the request, locating a record associated with the selected franking system;
verifying an identity of the selected franking system based on the coded information, the record including stored information concerning a selected configuration; and
providing through the communications network to the selected franking system information objects including software components for modifying the generic configuration to the selected customized configuration based on the stored information when the identity of the selected franking system is verified, the information objects including software components being preselected by a user of the selected franking system.

12. The method of claim 11 wherein the coded information comprises encrypted information concerning the identity of the selected franking system.

13. The method of claim 12 wherein the coded information comprises encrypted information concerning a serial number of the selected franking system.

14. The method of claim 12 wherein the encrypted information is encrypted in accordance with a public key algorithm.

15. The method of claim 11 wherein the coded information includes a digital signature resulting from cryptographically signing at least part of the request.

16. The method of claim 11 wherein the information objects further include data.

17. A method for use in a franking system configurable by a server through a communications network, the franking system including a memory, the method comprising:
storing a cryptographic element;
generating a request automatically on an initial power up of the franking system for configuration of the franking system from a generic configuration to a selected customized configuration which includes therein coded information for verification by the server of an identity of the franking system, the coded information being generated using the cryptographic element;
receiving information objects including software components preselected by a user of the franking system for modifying the generic configuration of the franking system to the selected customized configuration from the server through the communications network when the identity of the franking system is verified by the server; and
loading the information objects including software components in the memory in accordance with a predetermined plan.

18. The method of claim 17 wherein the cryptographic element includes a private key.

19. The method of claim 17 wherein the coded information comprises a digital signature resulting from cryptographically signing at least part of the request.

20. The method of claim 17 wherein the information objects further include data.

## Patentansprüche

1. Vorrichtung (130) zum Bedienen mehrerer Frankiersysteme (105) über ein Kommunikationsnetzwerk (145), wobei die Vorrichtung umfaßt:
einen Speicher (135) zum Speichern mehrerer Datensätze (139), die jeweils mit den Frankiersystemen verknüpft sind,
ein Eingabeelement zum Empfangen einer Anforderung von einem ausgewählten Frankiersystem, welche bei einem Einschalten des ausgewählten Frankiersystems automatisch generiert wird, zur Konfiguration des ausgewählten Frankiersystems von einer generischen Konfiguration zu einer ausgewählten kundenspezifischen Konfiguration über das Kommunikationsnetzwerk, wobei die Anforderung codierte Informationen enthält,
einen Prozessor (133), der auf die Anforderung reagiert, zum Lokalisieren eines mit dem ausgewählten Frankiersystem verknüpften Datensatzes und Überprüfen einer Identität des ausgewählten Frankiersystems anhand der codierten Informationen, wobei der Datensatz gespeicherte Informationen betreffs der ausgewählten kundenspezifischen Konfiguration für das ausgewählte Frankiersystem enthält, wobei die ausgewählte kundenspezifische Konfiguration ausgewählten Frankiersystem-Informationsobjekten mit softwarekomponenten entspricht, die von einem Benutzer des ausgewählten Frankiersystems vorgewählt wurden, und
ein Ausgabeelement zum Bereitstellen von Informationsobjekten mit softwarekomponenten über das Kommunikationsnetzwerk an das ausgewählte Frankiersystem, zum Modifizieren der generischen Konfiguration zu der ausgewählten kundenspezifischen Konfiguration anhand der gespeicherten Informationen, wenn die Identität des ausgewählten Frankiersystems überprüft wird.

2. Vorrichtung nach Anspruch 1, wobei die codierten Informationen verschlüsselte Informationen umfassen, welche die Identität des ausgewählten Frankiersystems betreffen.

3. Vorrichtung nach Anspruch 2, wobei die codierten Informationen verschlüsselte Informationen umfassen, welche eine Seriennummer des ausgewählten Frankiersystems betreffen.

4. Vorrichtung nach Anspruch 2, wobei die verschlüsselten Informationen gemäß einem Algorithmus mit öffentlichem Schlüssel verschlüsselt sind.

5. Vorrichtung nach Anspruch 1, wobei die codierten Informationen eine digitale Signatur umfassen, die aus einem kryptographischen Signieren mindestens eines Teils der Anforderung resultiert.

6. Vorrichtung nach Anspruch 1, wobei die Informationsobjekte Daten enthalten.

7. Frankiersystem (105), das durch einen Server (130) über ein Kommunikationsnetzwerk (145) konfigurierbar ist, wobei das Frankiersystem umfaßt:
Speicher (109) zum Speichern eines kryptographischen Elements,
einen Prozessor (107) zum Generieren einer Anforderung, welche bei einem Einschalten des Frankiersystems automatisch generiert wird, zur Konfiguration des Frankiersystems von einer generischen Konfiguration zu einer ausgewählten kundenspezifischen Konfiguration, und welche codierte Informationen zur Überprüfung einer Identität des Frankiersystems durch den Server enthält, wobei die codierten Informationen unter Verwendung des kryptographischen Elements generiert werden,
eine Schnittstelle (113) zum Empfangen von durch einen Benutzer des Frankiersystems vorgewählten Informationsobjekten mit softwarekomponenten zum Konfigurieren des Frankiersystems von dem Server über das Kommunikationsnetzwerk, wenn die Identität des Frankiersystems durch den Server überprüft wird, wobei die Informationsobjekte mit softwarekomponenten die generische Konfiguration des Frankiersystems modifizieren,
einen Speicher (111) und
eine Ladeeinrichtung zum Lenken der in den Speicher zu ladenden Informationsobjekte mit softwarekomponenten entsprechend einem vorbestimmten Plan.

8. Frankiersystem nach Anspruch 7, wobei das kryptographische Element einen privaten Schlüssel enthält.

9. Frankiersystem nach Anspruch 7, wobei die codierten Informationen eine digitale Signatur umfassen, die aus einem kryptographischen Signieren mindestens eines Teils der Anforderung resultiert.

10. Frankiersystem nach Anspruch 7, wobei die Informationsobjekte Daten enthalten.

11. Verfahren zur Anwendung in einer Vorrichtung zum Bedienen mehrerer Frankiersysteme ein Kommunikationsnetzwerk, wobei das Verfahren umfaßt:
Speichern mehrerer Datensätze, die jeweils mit den Frankiersystemen verknüpft sind,
Empfangen einer Anforderung von einem ausgewählten Frankiersystem, welche bei einem Einschalten des ausgewählten Frankiersystems automatisch generiert wird, zur Konfiguration des ausgewählten Frankiersystems von einer generischen Konfiguration zu einer ausgewählten kundenspezifischen Konfiguration über das Kommunikationsnetzwerk, wobei die Anforderung codierte Informationen enthält,
in Reaktion auf die Anforderung, Lokalisieren eines mit dem ausgewählten Frankiersystem verknüpften Datensatzes,
Überprüfen einer Identität des ausgewählten Frankiersystems anhand der codierten Informationen, wobei der Datensatz gespeicherte Informationen betreffs einer ausgewählten Konfiguration enthält, und
Bereitstellen von Informationsobjekten mit softwarekomponenten über das Kommunikationsnetzwerk an das ausgewählte Frankiersystem, zum Modifizieren der generischen Konfiguration zu der ausgewählten kundenspezifischen Konfiguration anhand der gespeicherten Informationen, wenn die Identität des ausgewählten Frankiersystems überprüft wird, wobei die Informationsobjekte mit softwarekomponenten von einem Benutzer des ausgewählten Frankiersystems vorgewählt werden.

12. Verfahren nach Anspruch 11, wobei die codierten Informationen verschlüsselte Informationen umfassen, welche die Identität des ausgewählten Frankiersystems betreffen.

13. Verfahren nach Anspruch 12, wobei die codierten Informationen verschlüsselte Informationen umfassen, welche eine Seriennummer des ausgewählten Frankiersystems betreffen.

14. Verfahren nach Anspruch 12, wobei die verschlüsselten Informationen gemäß einem Algorithmus mit öffentlichem Schlüssel verschlüsselt sind.

15. Verfahren nach Anspruch 11, wobei die codierten Informationen eine digitale Signatur umfassen, die aus einem kryptographischen Signieren mindestens eines Teils der Anforderung resultiert.

16. Verfahren nach Anspruch 11, wobei die Informationsobjekte Daten enthalten.

17. Verfahren zur Anwendung in einem Frankiersystem, das durch einen Server über ein Kommunikationsnetzwerk konfigurierbar ist, wobei das Frankiersystem einen Speicher enthält, wobei das Verfahren umfaßt:
Speichern eines kryptographischen Elements,
automatisches Generieren einer Anforderung bei einem Einschalten des Frankiersystems zur Konfiguration des Frankiersystems von einer generischen Konfiguration zu einer ausgewählten kundenspezifischen Konfiguration, welche codierte Informationen zur Überprüfung einer Identität des Frankiersystems durch den Server enthält, wobei die codierten Informationen unter Verwendung des kryptographischen Elements generiert werden,
Empfangen von durch einen Benutzer des Frankiersystems vorgewählten Informationsobjekten mit softwarekomponenten zum Modifizieren der generischen Konfiguration des Frankiersystems zu der ausgewählten kundenspezifischen Konstruktion von dem Server über das Kommunikationsnetzwerk, wenn die Identität des Frankiersystems durch den Server überprüft wird, und
Laden der Informationsobjekte mit softwarekomponenten in den Speicher entsprechend einem vorbestimmten Plan.

18. Verfahren nach Anspruch 17, wobei das kryptographische Element einen privaten Schlüssel enthält.

19. Verfahren nach Anspruch 17, wobei die codierten Informationen eine digitale Signatur umfassen, die aus einem kryptographischen Signieren mindestens eines Teils der Anforderung resultiert.

20. Vorrichtung nach Anspruch 17, wobei die Informationsobjekte Daten enthalten.

## Revendications

1. Appareil (130) destiné à desservir une pluralité de systèmes d'affranchissement (105) par l'intermédiaire d'un réseau de communication (145), l'appareil comprenant :
une mémoire (135) pour mémoriser une pluralité d'enregistrements (139) respectivement associés aux systèmes d'affranchissement ;
un élément d'entrée pour recevoir d'un système d'affranchissement sélectionné une demande qui est générée automatiquement lors d'une mise en marche initiale du système d'affranchissement sélectionné de configuration du système d'affranchissement sélectionné d'une configuration générique en une configuration personnalisée sélectionnée par l'intermédiaire du réseau de communication, la demande comprenant des informations codées ;
un processeur (133) pour, en réponse à la demande, localiser un enregistrement associé au système d'affranchissement sélectionné et vérifier une identité du système d'affranchissement sélectionné sur la base des informations codées, l'enregistrement comprenant des informations mémorisées concernant la configuration personnalisée sélectionnée pour le système d'affranchissement sélectionné, la configuration personnalisée sélectionnée correspondant à des objets d'informations de système d'affranchissement sélectionné comprenant des composants logiciels présélectionnés par un utilisateur du système d'affranchissement sélectionné ; et
un élément de sortie pour fournir, par l'intermédiaire du réseau de communication, au système d'affranchissement sélectionné, des objets d'informations comprenant des composants logiciels pour modifier la configuration générique en la configuration personnalisée sélectionnée sur la base des informations mémorisées lorsque l'identité du système d'affranchissement sélectionné est vérifiée.

2. Appareil selon la revendication 1, dans lequel les informations codées comprennent des informations chiffrées concernant l'identité du système d'affranchissement sélectionné.

3. Appareil selon la revendication 2, dans lequel les informations codées comprennent des informations chiffrées concernant un numéro de série du système d'affranchissement sélectionné.

4. Appareil selon la revendication 2, dans lequel les informations chiffrées sont chiffrées conformément à un algorithme à clé publique.

5. Appareil selon la revendication 1, dans lequel les informations codées comprennent une signature numérique résultant de la signature cryptographique d'au moins une partie de la demande.

6. Appareil selon la revendication 1, dans lequel les objets d'informations comprennent des données.

7. Système d'affranchissement (105) configurable par un serveur (130) par l'intermédiaire d'un réseau de communication (145), le système d'affranchissement comprenant :
une mémoire (109) pour mémoriser un élément cryptographique ;
un processeur (107) pour générer une demande qui est générée automatiquement lors d'une mise en marche initiale du système d'affranchissement de configuration du système d'affranchissement d'une configuration générique en une configuration personnalisée sélectionnée qui comprend dans celle-ci des informations codées pour la vérification par le serveur d'une identité du système d'affranchissement, les informations codées étant générées en utilisant l'élément cryptographique ;
une interface (113) pour recevoir des objets d'informations comprenant des composants logiciels présélectionnés par un utilisateur du système d'affranchissement, pour la configuration du système d'affranchissement, du serveur, par l'intermédiaire du réseau de communication lorsque l'identité du système d'affranchissement est vérifiée par le serveur, les objets d'informations comprenant des composants logiciels modifiant la configuration générique du système d'affranchissement ;
une mémoire (111) ; et
un chargeur pour diriger les objets d'informations comprenant des composants logiciels à charger dans la mémoire selon un plan prédéterminé.

8. Système d'affranchissement selon la revendication 7, dans lequel l'élément cryptographique comprend une clé privée.

9. Système d'affranchissement selon la revendication 7, dans lequel les informations codées comprennent une signature numérique résultant de la signature cryptographique d'au moins une partie de la demande.

10. Système d'affranchissement selon la revendication 7, dans lequel les objets d'informations comprennent des données.

11. Procédé destiné à être utilisé dans un appareil destiné à desservir une pluralité de systèmes d'affranchissement par l'intermédiaire d'un réseau de communication, le procédé consistant à :
mémoriser une pluralité d'enregistrements respectivement associés aux systèmes d'affranchissement ;
recevoir d'un système d'affranchissement sélectionné une demande qui est générée automatiquement lors d'une mise en marche initiale du système d'affranchissement sélectionné de configuration du système d'affranchissement sélectionné d'une configuration générique en une configuration personnalisée sélectionnée par l'intermédiaire du réseau de communication, la demande comprenant des informations codées ;
en réponse à la demande, localiser un enregistrement associé au système d'affranchissement sélectionné ;
vérifier une identité du système d'affranchissement sélectionné sur la base des informations codées, l'enregistrement comprenant des informations mémorisées concernant la configuration sélectionnée ; et
fournir, par l'intermédiaire du réseau de communication, au système d'affranchissement sélectionné, des objets d'informations comprenant des composants logiciels pour modifier la configuration générique en la configuration personnalisée sélectionnée sur la base des informations mémorisées lorsque l'identité du système d'affranchissement sélectionné est vérifiée, les objets d'informations comprenant des composants logiciels étant présélectionnés par un utilisateur du système d'affranchissement sélectionné.

12. Procédé selon la revendication 11, dans lequel les informations codées comprennent des informations chiffrées concernant l'identité du système d'affranchissement sélectionné.

13. Procédé selon la revendication 12, dans lequel les informations codées comprennent des informations chiffrées concernant un numéro de série du système d'affranchissement sélectionné.

14. Procédé selon la revendication 12, dans lequel les informations chiffrées sont chiffrées selon un algorithme à clé publique.

15. Procédé selon la revendication 11, dans lequel les informations codées comprennent une signature numérique résultant de la signature cryptographique d'au moins une partie de la demande.

16. Procédé selon la revendication 11, dans lequel les objets d'informations comprennent des données.

17. Procédé destiné à être utilisé dans un système d'affranchissement configurable par un serveur par l'intermédiaire d'un réseau de communication, le système d'affranchissement comprenant une mémoire, le procédé consistant à :
mémoriser un élément cryptographique ;
générer une demande automatiquement lors d'une mise en marche initiale du système d'affranchissement de configuration du système d'affranchissement d'une configuration générique en une configuration personnalisée sélectionnée qui comprend dans celle-ci des informations codées pour la vérification par le serveur d'une identité du système d'affranchissement, les informations codées étant générées en utilisant l'élément cryptographique ;
recevoir des objets d'informations comprenant des composants logiciels présélectionnés par un utilisateur du système d'affranchissement pour modifier la configuration générique du système d'affranchissement en la configuration personnalisée sélectionnée, du serveur, par l'intermédiaire du réseau de communication, lorsque l'identité du système d'affranchissement est vérifiée par le serveur ; et
charger les objets d'informations comprenant des composants logiciels dans la mémoire selon un plan prédéterminé.

18. Procédé selon la revendication 17, dans lequel l'élément cryptographique comprend une clé privée.

19. Procédé selon la revendication 17, dans lequel les informations codées comprennent une signature numérique résultant de la signature cryptographique d'au moins une partie de la demande.

20. Procédé selon la revendication 17, dans lequel les objets d'informations comprennent des données.
